# EUROPEAN PATENT APPLICATION

(11) **EP 4 503 781 A1**
(43) Date of publication of application: **05.02.2025**
(21) Application number: 22934137.5
(22) Date of filing: 30.03.2022
(51) Int. Cl.: H04W 64/00, H04L 5/00

(54) **METHODS AND APPARATUSES FOR CONFIGURING UPLINK POSITIONING REFERENCE SIGNAL, AND DEVICES AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/084226
(87) International publication number: WO 2023/184287

(57) **Abstract**

The present application relates to the field of mobile communications. Provided are methods and apparatuses for configuring an uplink positioning reference signal, and devices and a storage medium. A method comprises: receiving a message, which is used for configuring an uplink positioning reference signal (202), wherein the message comprises an uplink positioning reference signal configuration of the uplink positioning reference signal and a valid range and/or a valid time associated with the uplink positioning reference signal configuration, the valid range is used for indicating a zone range in which the uplink positioning reference signal configuration is valid, and the valid time is used for indicating a time period in which the uplink positioning reference signal configuration is valid. When an uplink positioning reference signal configuration is valid, a terminal device can continuously use the uplink positioning reference signal configuration. Even if the terminal device performs cell reselection, the terminal device can still continue using the uplink positioning reference signal configuration, such that frequent information exchange with a network device is avoided, thereby reducing the power consumption of the terminal device.

## Description

### FIELD

The present invention relates to the field of mobile communications, and in particular to a method, apparatus and device for configuring a reference signal, and a storage medium.

### BACKGROUND

A variety of positioning techniques are introduced in the 5th generation mobile communication technology (5G) new radio (NR) to position terminals.

For the uplink positioning technique and the uplink-downlink combined positioning technique, a network device needs to configure an uplink positioning reference signal for a terminal, so that the terminal sends the uplink positioning reference signal to the network device according to the uplink positioning reference signal configuration, thereby realizing the positioning of the terminal.

Regarding the manner for configuring the uplink positioning reference signal to the terminal, further discussion and research are needed.

### SUMMARY

Embodiments of the present invention provide a method, apparatus and device for configuring an uplink positioning reference signal, and a storage medium. The technical solutions are as follows.

In an aspect, the present invention provides a method for configuring an uplink positioning reference signal, which is performed by a terminal, and includes: receiving a message for configuring the uplink positioning reference signal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In another aspect, the present invention provides a method for configuring an uplink positioning reference signal, which is performed by a network device, and includes: sending a message for configuring the uplink positioning reference signal to a terminal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In another aspect, the present invention provides an apparatus for configuring an uplink positioning reference signal, which includes: a receiving module, configured to receive a message for configuring the uplink positioning reference signal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In another aspect, the present invention provides an apparatus for configuring an uplink positioning reference signal, which includes: a sending module, configured to send a message for configuring the uplink positioning reference signal to a terminal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In another aspect, the present invention provides a terminal, which includes: a processor; a transceiver, connected to the processor; and a memory, configured to store instructions executable by the processor. The processor is configured to load and execute the executable instructions to perform the method for configuring the uplink positioning reference signal as described in the above aspects.

In another aspect, the present invention provides a network device, which includes: a processor; a transceiver, connected to the processor; and a memory, configured to store instructions executable by the processor. The processor is configured to load and execute the executable instructions to perform the method for configuring the uplink positioning reference signal as described in the above aspects.

In another aspect, the present invention provides a computer-readable storage medium having stored therein executable instructions that, when loaded and executed by a processor, cause the method for configuring the uplink positioning reference signal as described in the above aspects to be implemented.

In another aspect, the present invention provides a chip, which includes a programmable logic circuit and/or a program instruction. The chip, when run on a computer equipment, causes the method for configuring the uplink positioning reference signal as described in the above aspects to be implemented.

In another aspect, the present invention provides a computer program product or a computer program. The computer program product or the computer program includes computer instructions, the computer instructions are stored in a computer-readable storage medium, and a processor reads the computer instructions from the computer-readable storage medium and executes the computer instruction to cause a computer equipment to execute the method for configuring the uplink positioning reference signal as described in the above aspects.

The technical solution provided in present invention at least includes the following beneficial effects.

The associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

### BRIEF DESCRIPTION OF THE DRAWINGS

In order to illustrate the technical solutions in embodiments of the present invention more clearly, drawings to be used in the description of embodiments of the present invention will be briefly introduced below. Apparently, the drawings in the following description only involve some embodiments of the present invention, and other drawings may also be obtained by those of ordinary skill in the art on the basis of these drawings without creative efforts.
FIG. 1 is a schematic system architecture diagram of a communication system according to an example embodiment of the present invention;
FIG. 2 is a schematic flowchart of a method for configuring an uplink positioning reference signal according to an example embodiment of the present invention;
FIG. 3 is a schematic flowchart of a method for configuring an uplink positioning reference signal according to an example embodiment of the present invention;
FIG. 4 is a schematic flowchart of a method for configuring an uplink positioning reference signal according to an example embodiment of the present invention;
FIG. 5 is a schematic flowchart of a method for configuring an uplink positioning reference signal according to an example embodiment of the present invention;
FIG. 6 is a schematic flowchart of a method for sending an uplink positioning reference signal according to an example embodiment of the present invention;
FIG. 7 is a schematic flowchart of a method for configuring an uplink positioning reference signal according to an example embodiment of the present invention;
FIG. 8 is a schematic flowchart of a method for configuring an uplink positioning reference signal according to an example embodiment of the present invention;
FIG. 9 is a schematic flowchart of a method for configuring an uplink positioning reference signal according to an example embodiment of the present invention;
FIG. 10 is a schematic diagram showing cells according to an example embodiment of the present invention;
FIG. 11 is a schematic block diagram of an apparatus for configuring an uplink positioning reference signal according to an example embodiment of the present invention;
FIG. 12 is a schematic block diagram of an apparatus for configuring an uplink positioning reference signal according to an example embodiment of the present invention; and
FIG. 13 is a schematic block diagram of a communication device according to an example embodiment of the present invention.

### DETAILED DESCRIPTION

In order to make the objects, technical solutions and advantages of the present invention clearer, embodiments of the present invention will be further described in detail below with reference to the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

Terms used in embodiments of the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "in response to determining".

A variety of positioning techniques are introduced in the 5th generation mobile communication technology (5G) new radio (NR) to position terminals. For the uplink positioning technique and the uplink-downlink combined positioning technique, an uplink positioning reference signal sent by the terminal to the network device needs to be used to position the terminal. The uplink positioning reference signal is a sounding reference signal (SRS). The network device needs to first configure the uplink positioning reference signal for the terminal before it can receive the uplink positioning reference signal sent by the terminal. By sending an uplink positioning reference signal configuration to the terminal, the network device can configure the uplink positioning reference signal for the terminal. The uplink positioning reference signal configuration includes a time-frequency resource to be used by the terminal when sending the uplink positioning reference signal.

In NR of Release 16 (R16), the following methods for positioning a terminal based on the SRS are introduced:
- enhanced cell identifier document (ID) positioning method;
- uplink time difference of arrival positioning method;
- multi-round-trip time positioning method;
- uplink angle of arrival positioning method.

In the above methods, the uplink positioning reference signal needs to be used. In R16, when a terminal is positioned through the above method, the terminal needs to be in a radio resource control (RRC) connected state, which will result in high power consumption of the terminal.

In NR of R17, positioning of a terminal in an RRC inactive state is supported. When the terminal is in the RRC inactive state, it is able to send the uplink positioning reference signal to the network device. Specifically, when the network device switches the terminal from the RRC connected state to the RRC inactive state, it will configure the uplink positioning reference signal for the terminal via an RRC release message. Detailed configuration corresponding to the uplink positioning reference signal is included in a sounding reference signal positioning radio resource control inactive configuration (srs-PosRRC-InactiveConfig) of the RRC release message, and in the case where the terminal performs a cell reselection, the terminal needs to release the uplink positioning reference signal configured therefor by the network device, i.e., to release the uplink positioning reference signal configuration. For example, after the cell reselection, the terminal will delete the locally saved uplink positioning reference signal configuration.

Because the terminal in the RRC inactive state will release the uplink positioning reference signal configured therefor by the network device when the cell reselection occurs, the uplink positioning reference signal needs to be reconfigured for the terminal. At this time, the terminal will interact with the network device to obtain the uplink positioning reference signal configuration. In the above situation, if the terminal moves quickly (such as an Internet of Vehicle (IoV) device), the terminal may frequently perform the cell reselection, resulting in frequent interactions between the terminal and the network device to obtain the uplink positioning reference signal configuration, which will increase the power consumption of the terminal.

At present, it is proposed to position the terminal with low power and high accuracy, so a higher requirement is put forward for the power consumption of the terminal in the process of positioning. For a terminal in an RRC idle state or an RRC inactive state, if the above solution of configuring the uplink positioning reference signal for the terminal in the RRC inactive state is adopted for positioning, the power consumption of the terminal may be high, which cannot meet the positioning requirements of low power and high accuracy.

The method according to embodiments of the present invention can configure the uplink positioning reference signal for the terminal, and as the same time can configure an associated valid range and/or valid time for the uplink positioning reference signal, thereby achieving the indication of the area range and/or the period of time in which the uplink positioning reference signal configuration is valid. In the case where the uplink positioning reference signal configuration is valid, the terminal can continue to use the uplink positioning reference signal configuration, even if the terminal performs the cell reselection, which avoids frequent information interaction with the network device and reduces the power consumption of the terminal.

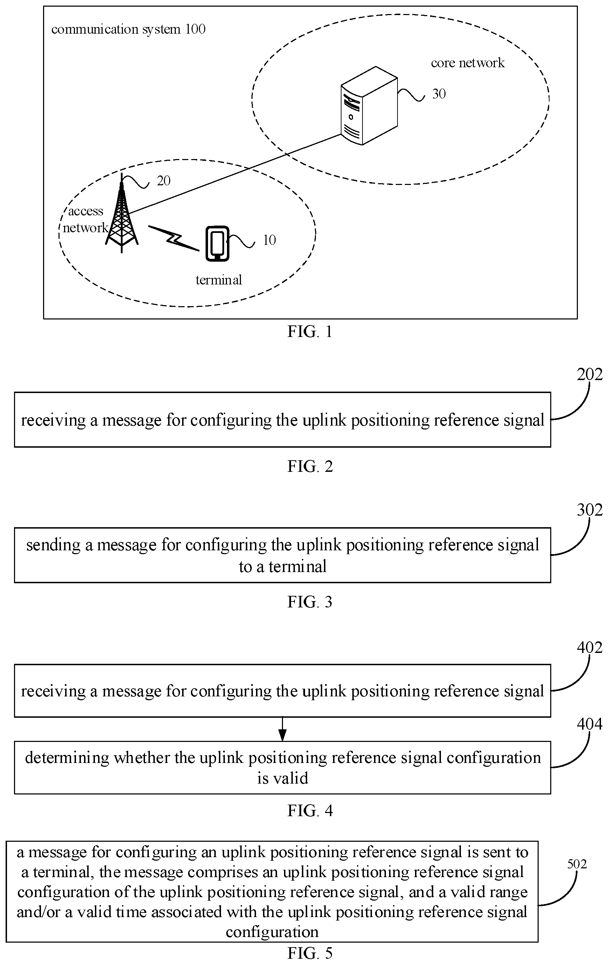

FIG. 1 shows a schematic system architecture diagram of a communication system according to an example embodiment of the present invention. The system architecture may include: a terminal 10, an access network device 20 and a core network device 30.

The terminal 10 may refer to a user equipment (UE), an access terminal, a subscriber unit, a user station, a mobile station, a mobile, a remote station, a remote terminal, a mobile equipment, a wireless communication device, a user agent or a user device. Optionally, the terminal may also be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, a vehicle-mounted device, a wearable device, a terminal in a 5th generation (5GS) mobile communication system, a terminal in a future evolved public land mobile network (PLMN), or the like, which is not limited in embodiments of the present invention. For convenience of description, the devices mentioned above are collectively referred to as terminals. Usually, there exist a plurality of terminals 10, and one or more terminals 10 may be distributed in a cell managed by an access network device 20.

The access network device 20 is a device deployed in the access network to provide the wireless communication function for the terminal 10. The access network device 20 may include various forms of macro base stations, micro base stations, relay stations, access points, etc. In systems using different wireless access techniques, the names of devices with the function of the access network device may be different. For example, in a 5G NR system, they are called gNodeB or gNB. With the evolution of the communication technology, the name of the "access network device" may change. For convenience of description, in embodiments of the present invention, the above-mentioned devices that provide the wireless communication function for the terminal 10 are collectively referred to as access network devices. Optionally, through the access network device 20, a communication relationship may be established between the terminal 10 and the core network device 30. For example, in an LTE system, the access network device 20 may be an evolved universal terrestrial radio access network (EUTRAN) or one or more eNodeBs in the EUTRAN; in a 5G NR system, the access network device 20 may be an RAN or one or more gNBs in the RAN.

The functions of the core network device 30 are mainly to provide user connection, user management and service carrying, and serve as a carrier network to provide an interface to an external network. For example, the core network device in the 5G NR system may include an access and mobility management function (AMF) entity, a user plane function (UPF) entity, a session management function (SMF) entity, and other devices. The access network device 20 and the core network device 30 may be collectively referred to as network devices.

In an example, the access network device 20 and the core network device 30 communicate with each other through a certain over-the-air technique, such as an NG interface in the 5G NR system. The access network device 20 and the terminal 10 communicate with each other through a certain over-the-air technique, such as a Uu interface.

FIG. 2 is a schematic flowchart of a method for configuring an uplink positioning reference signal according to an embodiment of the present invention. The method may be applied to the terminal shown in FIG. 1. The method includes a following step.

In step 202, a message for configuring an uplink positioning reference signal is received.

The message includes an uplink positioning reference signal configuration of the uplink positioning reference signal, and a valid range and/or a valid time associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal.

Optionally, the above message is sent by a network device to the terminal. For example, the network device is a base station. Further, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

The valid range indicates an area range in which the uplink positioning reference signal configuration is valid, and the valid time indicates a period of time in which the uplink positioning reference signal configuration is valid.

In the case where the uplink positioning reference signal includes the valid range (it may be regarded as the uplink positioning reference signal configuration being associated with the valid range), when the terminal is within the valid range, the terminal will continue to use the uplink positioning reference signal configuration to send the uplink positioning reference signal. When the terminal is not within the valid range, the terminal will release the uplink positioning reference signal (it may be regarded as releasing the uplink positioning reference signal configuration), for example, the terminal deletes the uplink positioning reference signal configuration locally and stops sending the uplink positioning reference signal.

In the case where the uplink positioning reference signal includes the valid time (it may be regarded as the uplink positioning reference signal configuration being associated with the valid time), when the terminal determines that a current moment is within the valid time, the terminal will continue to use the uplink positioning reference signal configuration to send the uplink positioning reference signal. When the terminal determines that the current moment is not within the valid time, the terminal will release the uplink positioning reference signal. Optionally, the terminal is able to determine whether the current moment is within the valid time in various manners, such as through a universal time coordinated (UTC) or a timer.

In the case where the uplink positioning reference signal includes the valid range and the valid time (it may be regarded as the uplink positioning reference signal configuration being associated with the valid range and the valid time), when the terminal is within the valid range and the terminal determines that the current moment is within the valid time, or one of the above two conditions is met, the terminal will continue to use the uplink positioning reference signal configuration to send the uplink positioning reference signal. When the terminal is not within the valid range and the terminal determines that the current moment is within the invalid time, or one of the above two conditions is met, the terminal will release the uplink positioning reference signal.

In the case where the uplink positioning reference signal configuration is valid, the terminal can use the uplink positioning reference signal configuration to send the uplink positioning reference signal to the network device. For example, the terminal can use the time-frequency resource configured in the uplink positioning reference signal configuration to send the uplink positioning reference signal to the network device. The network device can receive the uplink positioning reference signal sent by the terminal according to the uplink positioning reference signal configuration. For example, the network device can receive the uplink positioning reference signal sent by the terminal according to the time-frequency resource configured in the uplink positioning reference signal configuration. The network device can position the terminal according to the uplink positioning reference signal.

To sum up, with the method according to embodiments of the present invention, the associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

FIG. 3 is a schematic flowchart of a method for configuring an uplink positioning reference signal according to an embodiment of the present invention. The method may be applied to the network device shown in FIG. 1. The method includes a following step.

In step 302, a message for configuring an uplink positioning reference signal is sent to a terminal.

The message includes an uplink positioning reference signal configuration of the uplink positioning reference signal, and a valid range and/or a valid time associated with the uplink positioning reference signal configuration. The uplink positioning reference signal configuration is used for the terminal to send the uplink positioning reference signal.

Optionally, the above message is sent by the network device to the terminal. For example, the network device is a base station. Further, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

The valid range indicates an area range in which the uplink positioning reference signal configuration is valid, and the valid time indicates a period of time in which the uplink positioning reference signal configuration is valid.

After receiving the above message, the terminal can obtain the uplink positioning reference signal configuration, and the valid range and/or the valid time associated with the uplink positioning reference signal configuration. Afterwards, the terminal will use the valid range and/or the valid time to determine whether the uplink positioning reference signal configuration is valid.

Optionally, in the case where the uplink positioning reference signal includes the valid range, the terminal uses the valid range to determine whether the uplink positioning reference signal configuration is valid. In the case where the uplink positioning reference signal includes the valid time, the terminal uses the valid time to determine whether the uplink positioning reference signal configuration is valid. In the case where the uplink positioning reference signal includes the valid range and the valid time, the terminal uses the valid time and/or the valid time to determine whether the uplink positioning reference signal configuration is valid.

In the case where the uplink positioning reference signal configuration is valid, the terminal can use the uplink positioning reference signal configuration to send the uplink positioning reference signal to the network device. The network device can receive the uplink positioning reference signal sent by the terminal according to the uplink positioning reference signal configuration. The network device can position the terminal according to the uplink positioning reference signal.

To sum up, with the method according to embodiments of the present invention, the associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

FIG. 4 is a schematic flowchart of a method for configuring an uplink positioning reference signal according to an embodiment of the present invention. The method may be applied to the terminal shown in FIG. 1. The method includes the following steps.

In step 402, a message for configuring an uplink positioning reference signal is received.

The message includes an uplink positioning reference signal configuration of the uplink positioning reference signal, and a valid range and/or a valid time associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal. The valid range indicates an area range in which the uplink positioning reference signal configuration is valid, and the valid time indicates a period of time in which the uplink positioning reference signal configuration is valid.

Optionally, the above message is sent by a network device to the terminal. For example, the network device is a base station. Further, the network device is a base station of a serving cell of the terminal. Optionally, the above message is an RRC message, such as an RRC release message or an RRC reconfiguration message.

Optionally, the valid range includes at least one of:
- a cell identifier;
- an RAN area identifier; or
- a system message area identifier.

Optionally, the cell identifier consists of cell global IDs (CGIs), for example is a CGI list. The RAN area identifier consists of RAN area codes, for example is a list of RAN area codes. The system message area identifier consists of system information area identifiers (systemInformationAreaIDs), for example is a systemInformationAreaID list. Optionally, the valid range may also include other types of area identifiers, such as a newly added area identifier which can reflect an area range in which the uplink positioning reference signal configuration is valid.

Optionally, the valid time includes at least one of:
- a valid period of time; or
- a valid cut-off moment.

The valid period of time includes a valid starting moment and a valid duration. Optionally, the valid period of time may also include only the valid duration, and the valid starting moment is determined by the terminal according to a moment when the above message is received.

In step 404, it is determined whether the uplink positioning reference signal configuration is valid.

**For the case where the uplink positioning reference signal includes the valid range:**
When the terminal is not within the valid range, the terminal will release the uplink positioning reference signal. For example, the terminal deletes the uplink positioning reference signal configuration locally and stops sending the uplink positioning reference signal. Optionally, the valid range includes a plurality of forms, and when the terminal determines that a current range is not in any of the plurality of forms, the terminal releases the uplink positioning reference signal.

It should be noted that each of the cell identifier, the RAN area identifier and the system message area identifier as described above may be regarded as a form of the valid range. In the case where the valid range includes one form, the terminal can determine whether the terminal is within the valid range by comparing a cell identifier of its serving cell with the cell identifier of the valid range. Alternatively, the terminal can determine whether the terminal is within the valid range by comparing an RAN area identifier corresponding to its serving cell with the RAN area identifier of the valid range. Alternatively, the terminal can determine whether the terminal is within the valid range by comparing a system message area identifier corresponding to its serving cell with the system message area identifier of the valid range.

In the case where the valid range includes a plurality of forms, the terminal will determine whether it is within the valid range according to one of the plurality of forms by using the above method. For example, the valid range includes the cell identifier, the RAN area identifier and the system message area identifier. The terminal will determine whether it is within the valid range according to the cell identifier by using the above method. Alternatively, the terminal will determine whether it is within the valid range according to some of the plurality of forms by using the above method. For example, the valid range includes the cell identifier, the RAN area identifier and the system message area identifier. When the terminal determines by using the above method that the current range is not within the range of the cell identifier, not within the range of the RAN area identifier, and not within the range of the system message area identifier, the terminal will determine that it is not within the valid range.

**For the case where the uplink positioning reference signal includes the valid time:**
When the terminal determines that a current moment is not within the valid time, the terminal will release the uplink positioning reference signal. Optionally, the terminal determines the current moment through the UTC. In the case where the valid time includes one of the valid period of time and the valid cut-off moment, the terminal determines whether the uplink positioning reference signal configuration is valid by comparing the determined current moment with the valid period of time or the valid cut-off moment. In the case where the valid time includes the valid period of time and the valid cut-off moment, the terminal will release the uplink positioning reference signal when the terminal determines that the current moment meets at least one of the following conditions:
- the current moment not within the period of time indicated by the valid starting moment and the valid duration; or
- the current moment exceeding the valid cut-off moment.

For example, if the current moment determined by the terminal is 2022-03-25 15:00:00, and the period of time indicated by the valid period of time is from 2022-03-25 14:00:00 to 2022-03-25 16:00:00, the terminal will determine that the current moment is within the period of time indicated by the valid period of time. If the current moment determined by the terminal is 2022-03-25 15:00:00, and the valid cut-off moment is 2022-03-25 14:00:00, the terminal will determine that the current moment exceeds the valid cut-off moment.

Optionally, in the case where the terminal determines whether the uplink positioning reference signal configuration is valid according to the valid period of time, a timer may be used to make the determination. For example, the terminal starts the timer at the valid starting moment, and sets a duration of the timer to the valid duration. When the timer expires, it will be deemed that the terminal determines that the current moment is not within the period of time indicated by the valid starting moment and the valid duration, and the terminal will release the uplink positioning reference signal.

**For the case where the uplink positioning reference signal includes the valid range and the valid time:**
When the terminal is not within the valid range and/or not within the valid time, the terminal will release the uplink positioning reference signal. The terminal will use the valid range to determine whether the uplink positioning reference signal configuration is valid, or the terminal will use the valid time to determine whether the uplink positioning reference signal configuration is valid, or the terminal will use both the valid range and the valid time to determine whether the uplink positioning reference signal configuration is valid. For the case where the terminal uses the valid range to determine whether the uplink positioning reference signal configuration is valid, reference may be made to the above description, and for the case where the terminal uses the valid time to determine whether the uplink positioning reference signal configuration is valid, reference may be made to the above description, both of which will not be elaborated here.

Optionally, the terminal periodically determines whether the uplink positioning reference signal configuration is valid. The period/cycle is configured in the terminal or indicated by the network device to the terminal. In addition, the terminal may also determine whether the uplink positioning reference signal configuration is valid according to an instruction from the network device. In addition, the terminal may also determine whether the uplink positioning reference signal configuration is valid when performing a cell reselection.

Optionally, in the case where the uplink positioning reference signal configuration is valid, the terminal can use the uplink positioning reference signal configuration to send the uplink positioning reference signal to the network device. The network device can receive the uplink positioning reference signal sent by the terminal according to the uplink positioning reference signal configuration. The network device can position the terminal according to the uplink positioning reference signal.

Optionally, the network device that receives the uplink positioning reference signal sent by the terminal may include a first network device and a second network device. The first network device is a network device of a cell where the terminal is located, and the first network device is the network device that sends the above message to the terminal. A cell of the second network device is different from the cell of the first network device. For example, the cell of the second network device is a neighboring cell of the cell of the first network device. When the terminal accesses the cell where the first network device is located, the uplink positioning reference signal sent through the uplink positioning reference signal configuration can be received by the first network device through the uplink positioning reference signal configuration. In addition, in the case where the terminal performs the cell reselection and accesses the cell where the second network device is located, and the uplink positioning reference signal configuration is valid, the terminal can also send the uplink positioning reference signal through the uplink positioning reference configuration, and the second network device can also receive the uplink positioning reference signal from the terminal through the uplink positioning reference signal configuration.

To sum up, with the method according to embodiments of the present invention, the associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

FIG. 5 is a schematic flowchart of a method for configuring an uplink positioning reference signal according to an embodiment of the present invention. The method may be applied to the network device shown in FIG. 1. The method includes a following step.

In step 502, a message for configuring an uplink positioning reference signal is sent to a terminal. The message includes an uplink positioning reference signal configuration of the uplink positioning reference signal, and a valid range and/or a valid time associated with the uplink positioning reference signal configuration.

The uplink positioning reference signal configuration is used for the terminal to send the uplink positioning reference signal. For example, the uplink positioning reference signal configuration includes a time-frequency resource to be used by the terminal to send the uplink positioning reference signal. The valid range indicates an area range in which the uplink positioning reference signal configuration is valid. The valid time indicates a period of time in which the uplink positioning reference signal configuration is valid.

Optionally, the valid range includes at least one of:
- a cell identifier;
- an RAN area identifier; or
- a system message area identifier.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. Optionally, the valid range may also include other types of area identifiers, such as a newly added area identifier which can reflect an area range in which the uplink positioning reference signal configuration is valid.

Optionally, the valid time includes at least one of:
- a valid period of time; or
- a valid cut-off moment.

The valid period of time includes a valid starting moment and a valid duration. Optionally, the valid period of time may also include only the valid duration, and the valid starting moment is determined by the terminal according to a moment when the above message is received.

Optionally, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

Optionally, in the case where the terminal determines that the uplink positioning reference signal configuration is valid according to the above-mentioned valid range and/or valid time, the terminal will send the uplink positioning reference signal through the uplink positioning reference signal configuration.

Optionally, the network device that receives the uplink positioning reference signal sent by the terminal may include a first network device and a second network device. The first network device is a network device of a cell where the terminal is located, and the first network device is the network device that sends the above message to the terminal. A cell of the second network device is different from the cell of the first network device. For example, the cell of the second network device is a neighboring cell of the cell of the first network device. When the terminal accesses the cell where the first network device is located, the uplink positioning reference signal sent through the uplink positioning reference configuration can be received by the first network device through the uplink positioning reference signal configuration. In addition, in the case where the terminal performs the cell reselection and accesses the cell where the second network device is located, and the uplink positioning reference signal configuration is valid, the terminal can also send the uplink positioning reference signal through the uplink positioning reference configuration, and the second network device can also receive the uplink positioning reference signal from the terminal through the uplink positioning reference signal configuration.

To sum up, with the method according to embodiments of the present invention, the associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

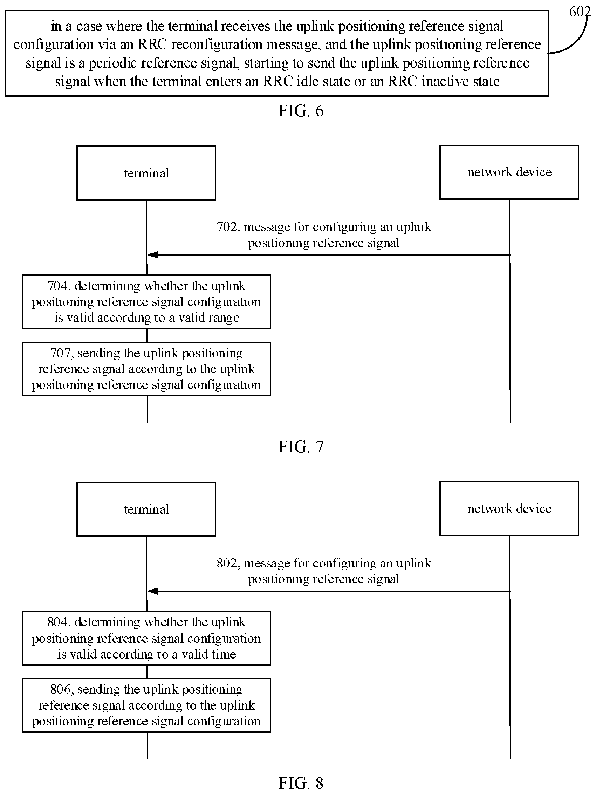

FIG. 6 is a schematic flowchart of a method for sending an uplink positioning reference signal according to an embodiment of the present invention. The method may be applied to the terminal shown in FIG. 1. The method includes a following step.

In step 602, in a case where the terminal receives the uplink positioning reference signal configuration via an RRC reconfiguration message, and the uplink positioning reference signal is a periodic reference signal, the terminals starts to send the uplink positioning reference signal when the terminal enters an RRC idle state or an RRC inactive state.

The uplink positioning reference signal configuration is acquired by the terminal from a message sent by the network device for configuring the uplink positioning reference signal. The message includes the uplink positioning reference signal configuration of the uplink positioning reference signal, and a valid range and/or a valid time associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal. The valid range indicates an area range in which the uplink positioning reference signal configuration is valid, and the valid time indicates a period of time in which the uplink positioning reference signal configuration is valid. The terminal determines whether the uplink positioning reference signal configuration is valid according to the valid range and/or the valid time.

Optionally, the above message is sent by the network device to the terminal. For example, the network device is a base station. Further, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

In the case where the above message is the RRC reconfiguration message, if the uplink positioning reference signal is the periodic reference signal, the terminal will start to send the uplink positioning reference signal when entering the RRC idle state or the RRC inactive state. The terminal will use the valid uplink positioning reference signal configuration to send the uplink positioning reference signal.

To sum up, with the method according to embodiments of the present invention, the associated valid range and/or valid time is configured for the uplink positioning reference signal at the same time when the uplink positioning reference signal is configured for the terminal, so as to indicate the area range and/or the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

The method according to embodiments of the present invention can configure the associated valid range and/or valid time for the uplink positioning reference signal while configuring the uplink positioning reference signal for the terminal, so as to indicate the area range and/or the period of time in which the uplink positioning reference signal configuration is valid. Configuring the associated valid range and/or valid time for the uplink positioning reference signal may include the following three cases:
(1) configuring the valid range associated with the uplink positioning reference signal;
(2) configuring the valid time associated with the uplink positioning reference signal; or
(3) configuring the valid range and the valid time associated with the uplink positioning reference signal.

The above three cases are introduced below with reference to three embodiments.

In the first case, the associated valid range is configured for the uplink positioning reference signal.

FIG. 7 is a schematic flowchart of a method for configuring an uplink positioning reference signal according to an embodiment of the present invention. The method may be applied to the system shown in FIG. 1. The method includes the following steps.

In step 702, the network device sends a message for configuring the uplink positioning reference signal to the terminal.

The message includes an uplink positioning reference signal configuration of the uplink positioning reference signal, and a valid range associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal. The valid range indicates an area range in which the uplink positioning reference signal configuration is valid. Optionally, the valid range includes at least one of:
- a cell identifier;
- an RAN area identifier; or
- a system message area identifier.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. Optionally, the valid range may also include other types of area identifiers, such as a newly added area identifier which can reflect an area range in which the uplink positioning reference signal configuration is valid.

Optionally, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

In step 704, the terminal determines whether the uplink positioning reference signal configuration is valid according to the valid range.

The terminal can determine whether the above-mentioned uplink positioning reference signal configuration is valid according to the valid range, and then release the uplink positioning reference signal or use the uplink positioning reference signal.

When the terminal is not within the valid range, the terminal will release the uplink positioning reference signal. Optionally, the valid range includes a plurality of forms, and when the terminal determines that a current range is not in any of the plurality of forms, the terminal releases the uplink positioning reference signal.

Optionally, the terminal periodically determines whether the uplink positioning reference signal configuration is valid. The period/cycle is configured in the terminal or indicated by the network device to the terminal. In addition, the terminal may also determine whether the uplink positioning reference signal configuration is valid according to an instruction from the network device. In addition, the terminal may also determine whether the uplink positioning reference signal configuration is valid when performing a cell reselection.

In step 706, the terminal sends the uplink positioning reference signal according to the uplink positioning reference signal configuration.

In the case where the uplink positioning reference signal configuration is valid, the terminal can use the uplink positioning reference signal configuration to send the uplink positioning reference signal to the network device. The network device can receive the uplink positioning reference signal sent by the terminal according to the uplink positioning reference signal configuration. The network device can position the terminal according to the uplink positioning reference signal.

Optionally, the network device that receives the uplink positioning reference signal sent by the terminal may include a first network device and a second network device. The first network device is a network device of a cell where the terminal is located, and the first network device is the network device that sends the above message to the terminal. A cell of the second network device is different from the cell of the first network device, and an area where the second network device is located belongs to the valid range, for example, the cell of the second network device is a neighboring cell of the cell of the first network device. When the terminal accesses the cell where the first network device is located, the uplink positioning reference signal sent through the uplink positioning reference configuration can be received by the first network device through the uplink positioning reference signal configuration. In addition, in the case where the terminal performs the cell reselection and accesses the cell where the second network device is located, the uplink positioning reference signal can also be sent through the uplink positioning reference configuration, and the second network device can also receive the uplink positioning reference signal from the terminal through the uplink positioning reference signal configuration.

Optionally, when the terminal receives the uplink positioning reference signal configuration via the RRC reconfiguration message, and the uplink positioning reference signal is a periodic reference signal, the terminal will start to send the uplink positioning reference signal when entering the RRC idle state or the RRC inactive state.

To sum up, with the method according to embodiments of the present invention, the associated valid range is configured for the uplink positioning reference signal at the same time when the uplink positioning reference signal is configured for the terminal, so as to indicate the area range in which the uplink positioning reference signal configuration is valid. In the case where the uplink positioning reference signal configuration is valid, the terminal can continue to use the uplink positioning reference signal configuration. Even if the terminal performs the cell reselection, the terminal can still continue to use the uplink positioning reference signal configuration, which avoids frequent information interaction with the network device and reduces the power consumption of the terminal.

**In the second case, the associated valid time is configured for the uplink positioning reference signal.**

FIG. 8 is a schematic flowchart of a method for configuring an uplink positioning reference signal according to an embodiment of the present invention. The method may be applied to the system shown in FIG. 1. The method includes the following steps.

In step 802, the network device sends a message for configuring the uplink positioning reference signal to the terminal.

The message includes an uplink positioning reference signal configuration of the uplink positioning reference signal, and a valid range associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal. The valid time indicates a period of time in which the uplink positioning reference signal configuration is valid. Optionally, the valid time includes at least one of:
- a valid period of time; or
- a valid cut-off moment.

The valid period of time includes a valid starting moment and a valid duration. Optionally, the valid period of time may also include only the valid duration, and the valid starting moment is determined by the terminal according to a moment when the above message is received.

Optionally, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

In step 804, the terminal determines whether the uplink positioning reference signal configuration is valid according to the valid time.

The terminal can determine whether the above uplink positioning reference signal configuration is valid according to the valid time, and then release the uplink positioning reference signal or use the uplink positioning reference signal.

When the terminal determines that a current moment is not within the valid time, the terminal will release the uplink positioning reference signal. Optionally, the terminal determines the current moment through the UTC. In the case where the valid time includes the valid period of time and the valid cut-off moment, the terminal will release the uplink positioning reference signal when the terminal determines that the current moment meets at least one of the following conditions:
- the current moment not within the period of time indicated by the valid starting moment and the valid duration; or
- the current moment exceeding the valid cut-off moment.

Optionally, in the case where the terminal determines whether the uplink positioning reference signal configuration is valid according to the valid period of time, a timer may be used to make the determination. For example, the terminal starts the timer at the valid starting moment, and sets a duration of the timer to the valid duration. When the timer expires, the terminal will release the uplink positioning reference signal.

Optionally, the terminal periodically determines whether the uplink positioning reference signal configuration is valid. The period/cycle is configured in the terminal or indicated by the network device to the terminal. In addition, the terminal may also determine whether the uplink positioning reference signal configuration is valid according to an instruction from the network device. In addition, the terminal may also determine whether the uplink positioning reference signal configuration is valid when performing a cell reselection.

In step 806, the terminal sends the uplink positioning reference signal according to the uplink positioning reference signal configuration.

In the case where the uplink positioning reference signal configuration is valid, the terminal can use the uplink positioning reference signal configuration to send the uplink positioning reference signal to the network device. The network device can receive the uplink positioning reference signal sent by the terminal according to the uplink positioning reference signal configuration. The network device can position the terminal according to the uplink positioning reference signal.

Optionally, the network device that receives the uplink positioning reference signal sent by the terminal may include a first network device and a second network device. The first network device is a network device of a cell where the terminal is located, and the first network device is the network device that sends the above message to the terminal. A cell of the second network device is different from the cell of the first network device. For example, the cell of the second network device is a neighboring cell of the cell of the first network device. When the terminal accesses the cell where the first network device is located, the uplink positioning reference signal sent through the uplink positioning reference signal configuration can be received by the first network device through the uplink positioning reference signal configuration. In addition, in the case where the terminal performs the cell reselection and accesses the cell where the second network device is located, and the current moment falls within the period of time indicated by the valid time, the terminal can also send the uplink positioning reference signal through the uplink positioning reference configuration, and the second network device can also receive the uplink positioning reference signal from the terminal through the uplink positioning reference signal configuration.

Optionally, when the terminal receives the uplink positioning reference signal configuration via the RRC reconfiguration message, and the uplink positioning reference signal is a periodic reference signal, the terminal will start to send the uplink positioning reference signal when entering the RRC idle state or the RRC inactive state.

To sum up, with the method according to embodiments of the present invention, the associated valid time is configured for the uplink positioning reference signal at the same time when the uplink positioning reference signal is configured for the terminal, so as to indicate the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

**In the third case, the associated valid range and valid time are configured for the uplink positioning reference signal.**

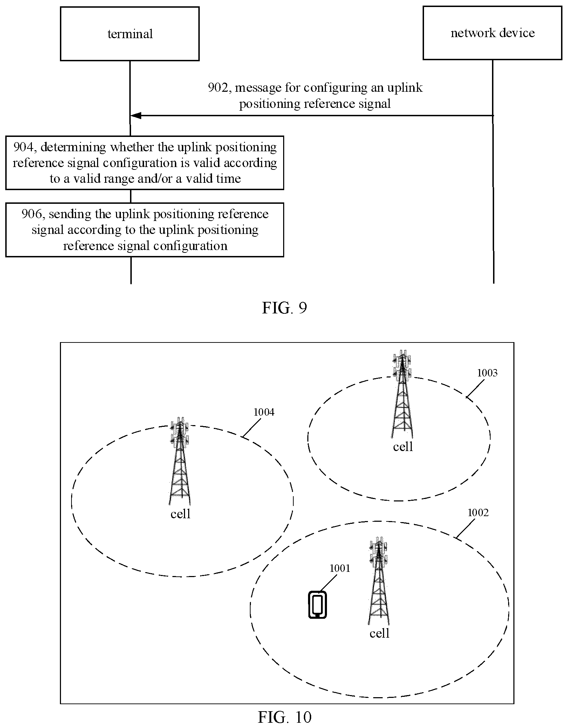

FIG. 9 is a schematic flowchart of a method for configuring an uplink positioning reference signal according to an embodiment of the present invention. The method may be applied to the system shown in FIG. 1. The method includes the following steps.

In step 902, the network device sends a message for configuring the uplink positioning reference signal to the terminal.

The message includes an uplink positioning reference signal configuration of the uplink positioning reference signal, and a valid range and a valid time associated with the uplink positioning reference signal configuration. The uplink positioning reference signal configuration is used for the terminal to send the uplink positioning reference signal. For example, the uplink positioning reference signal configuration includes a time-frequency resource to be used by the terminal to send the uplink positioning reference signal. The valid range indicates an area range in which the uplink positioning reference signal configuration is valid. The valid time indicates a period of time in which the uplink positioning reference signal configuration is valid.

Optionally, the valid range includes at least one of:
- a cell identifier;
- an RAN area identifier; or
- a system message area identifier.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. Optionally, the valid range may also include other types of area identifiers, such as a newly added area identifier which can reflect an area range in which the uplink positioning reference signal configuration is valid.

Optionally, the valid time includes at least one of:
- a valid period of time; or
- a valid cut-off moment.

The valid period of time includes a valid starting moment and a valid duration. Optionally, the valid period of time may also include only the valid duration, and the valid starting moment is determined by the terminal according to a moment when the above message is received.

Optionally, the network device is a base station of a serving cell of the terminal. The above uplink positioning reference signal configuration is stored in the base station of the serving cell of the terminal. Optionally, the above message is an RRC message, such as an RRC release message or an RRC reconfiguration message.

In step 904, the terminal determines whether the uplink positioning reference signal configuration is valid according to the valid range and/or the valid time.

When the terminal is not within the valid range and/or not within the valid time, the terminal will release the uplink positioning reference signal. The terminal will use the valid range to determine whether the uplink positioning reference signal configuration is valid, or the terminal will use the valid time to determine whether the uplink positioning reference signal configuration is valid, or the terminal will use both the valid range and the valid time to determine whether the uplink positioning reference signal configuration is valid. For the case where the terminal uses the valid range to determine whether the uplink positioning reference signal configuration is valid, and the terminal uses the valid time to determine whether the uplink positioning reference signal configuration is valid, reference may be made to the contents of step 404, which will not be elaborated here.

Optionally, the terminal periodically determines whether the uplink positioning reference signal configuration is valid. The period/cycle is configured in the terminal or indicated by the network device to the terminal. In addition, the terminal may also determine whether the uplink positioning reference signal configuration is valid according to an instruction from the network device. In addition, the terminal may also determine whether the uplink positioning reference signal configuration is valid when performing a cell reselection.

In step 906, the terminal sends the uplink positioning reference signal according to the uplink positioning reference signal configuration.

In the case where the uplink positioning reference signal configuration is valid, the terminal can use the uplink positioning reference signal configuration to send the uplink positioning reference signal to the network device. The network device can receive the uplink positioning reference signal sent by the terminal according to the uplink positioning reference signal configuration. The network device can position the terminal according to the uplink positioning reference signal.

Optionally, the network device that receives the uplink positioning reference signal sent by the terminal may include a first network device and a second network device. The first network device is a network device of a cell where the terminal is located, and the first network device is the network device that sends the above message to the terminal. A cell of the second network device is different from the cell of the first network device, optionally, the cell where the second network device is located is within the valid range, for example, the cell of the second network device is a neighboring cell of the cell of the first network device. When the terminal accesses the cell where the first network device is located, the uplink positioning reference signal sent through the uplink positioning reference signal configuration can be received by the first network device through the uplink positioning reference signal configuration. In addition, in the case where the terminal performs the cell reselection and accesses the cell where the second network device is located, and the current moment is within the period of time indicated by the valid time, the terminal can also send the uplink positioning reference signal through the uplink positioning reference configuration, and the second network device can also receive the uplink positioning reference signal from the terminal through the uplink positioning reference signal configuration.

For example, FIG. 10 is a schematic diagram showing cells according to an example embodiment of the present invention. As shown in FIG. 10, a cell currently accessed by a terminal 1001 is a cell 1002. A base station of the cell 1002 will send an uplink positioning reference signal configuration as well as a valid range and a valid time associated with the uplink positioning reference signal configuration to the terminal 1001. Afterwards, the terminal 1001 reselects and accesses a cell 1003, the terminal 1001 determines that it is within the valid range and the current moment is within the valid time, the terminal 1001 determines that the uplink positioning reference signal configuration is valid. At this time, the terminal 1001 will not interact with the network to re-obtain the uplink positioning reference signal configuration. In the cell 1003, the terminal 1001 uses the uplink positioning reference signal configuration obtained in the cell 1002 to send the uplink positioning reference signal, and a base station in the cell 1003 can receive the uplink positioning reference signal sent by the terminal 1001. Afterwards, the terminal 1001 reselects and accesses a cell 1004, the terminal 1001 determines that it is not within the valid range at this time, and the terminal 1001 determines that the uplink positioning reference signal configuration is invalid. At this time, the terminal 1001 will release the uplink positioning reference signal.

Optionally, when the terminal receives the uplink positioning reference signal configuration via the RRC reconfiguration message, and the uplink positioning reference signal is a periodic reference signal, the terminal will start to send the uplink positioning reference signal when entering the RRC idle state or the RRC inactive state.

To sum up, with the method according to embodiments of the present invention, the associated valid range and valid time are configured for the uplink positioning reference signal at the same time when the uplink positioning reference signal is configured for the terminal, so as to indicate the area range and the period of time in which the uplink positioning reference signal configuration is valid. In the case where the uplink positioning reference signal configuration is valid, the terminal can continue to use the uplink positioning reference signal configuration. Even if the terminal performs a cell reselection, the terminal can still continue to use the uplink positioning reference signal configuration, which avoids frequent information interaction with the network device and reduces the power consumption of the terminal.

It should be noted that the sequence of the method steps provided in embodiments of the present invention may be adjusted appropriately, and the steps may also be added or deleted accordingly according to the situations. Other variable methods are conceivable for any person familiar with the technical field within the technical scope disclosed in the present invention, and should be covered by the protection scope of the present invention, and therefore will not be elaborated here again.

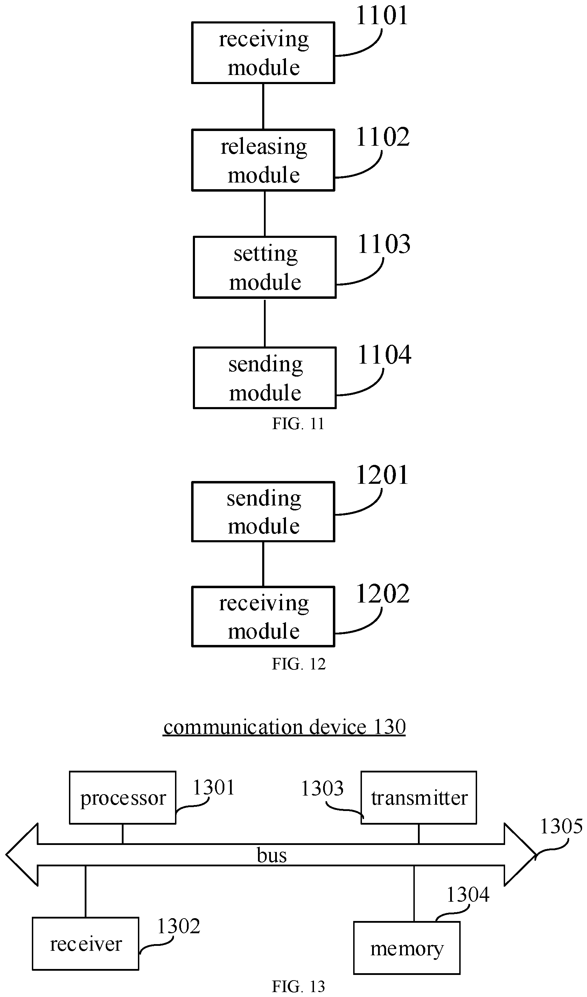

FIG. 11 is a schematic block diagram of an apparatus for configuring an uplink positioning reference signal according to an example embodiment of the present invention. As shown in FIG. 11, the apparatus includes a receiving module 1101.

The receiving module 1101 is configured to receive a message for configuring the uplink positioning reference signal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In an optional design, the valid range includes at least one of: a cell identifier; an RAN area identifier; or a system message area identifier.

In an optional design, the valid time includes at least one of: a valid period of time; or a valid cut-off moment. The valid period of time includes a valid starting moment and a valid duration.

In an optional design, the message is an RRC message.

In an optional design, the uplink positioning reference signal includes the valid range. The apparatus further includes: a releasing module 1102 configured to release the uplink positioning reference signal when the terminal is not within the valid range.

In an optional design, the valid range includes a plurality of forms; and the releasing module 1102 is configured to release the uplink positioning reference signal when the terminal determines that a current range is not within any of the plurality of forms.

In an optional design, the uplink positioning reference signal includes the valid time. The apparatus further includes: a releasing module 1102 configured to release the uplink positioning reference signal when the terminal determines that a current moment is not within the valid time.

In an optional design, the releasing module 1102 is configured to release the uplink positioning reference signal when the terminal determines that the current moment meets at least one of: the current moment not within the period of time indicated by the valid starting moment and the valid duration; or the current moment exceeding the valid cut-off moment.

In an optional design, the apparatus further includes: a setting module configured to start a timer at the valid starting moment and set a duration of the timer to the valid duration. The releasing module 1102 is configured to release the uplink positioning reference signal when the timer expires.

In an optional design, the uplink positioning reference signal includes the valid range and the valid time. The apparatus further includes: a releasing module 1102 configured to release the uplink positioning reference signal when the terminal is not within the valid range and/or not within the valid time.

In an optional design, the apparatus further includes: a sending module 1104 configured to, in a case where the terminal receives the uplink positioning reference signal configuration via an RRC reconfiguration message and the uplink positioning reference signal is a periodic reference signal, start to send the uplink positioning reference signal when the terminal enters an RRC idle state or an RRC inactive state.

FIG. 12 is a schematic block diagram of an apparatus for configuring an uplink positioning reference signal according to an example embodiment of the present invention. As shown in FIG. 12, the apparatus includes a sending module 1201.

The sending module 1201 is configured to send a message for configuring the uplink positioning reference signal to a terminal. The message includes an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

In an optional design, the valid range includes at least one of: a cell identifier; an RAN area identifier; or a system message area identifier.

In an optional design, the valid time includes at least one of: a valid period of time; or a valid cut-off moment. The valid period of time includes a valid starting moment and a valid duration.

In an optional design, the message is an RRC message.

In an optional design, the apparatus further includes: a receiving module 1202 configured to, in a case where the network device sends the uplink positioning reference signal configuration to the terminal via an RRC reconfiguration message and the uplink positioning reference signal is a periodic reference signal, receive the uplink positioning reference signal sent by the terminal when the terminal enters an RRC idle state or an RRC inactive state.

It should be noted that, in functional implementation, the apparatus according to the above embodiments are illustrated with reference to the above division of the functional modules as examples. In practical applications, the above-mentioned functions may be allocated to different functional modules as needed. That is, the internal structure of the apparatus is divided into different functional modules to complete some or all of the functions described above.

Regarding the apparatus in the above embodiments, the specific manners in which various modules thereof perform respective operations have been described in detail in embodiments related to the method, and thus will not be elaborated here.

FIG. 13 is a schematic block diagram of a communication device (a terminal or a network device) according to an example embodiment of the present invention, and the communication device 130 includes: a processor 1301, a receiver 1302, a transmitter 1303, a memory 1304 and a bus 1305.

The processor 1301 includes one or more processing cores, and the processor 1301 executes various functional applications and information processing by running software programs and modules.

The receiver 1302 and the transmitter 1303 may be implemented as a communication component, and the communication component may be a communication chip.

The memory 1304 is connected to the processor 1301 via the bus 1305.

The memory 1304 may be used to store at least one instruction, and the processor 1301 is used to execute the at least one instruction to implement various steps in the above method embodiments.

In addition, the memory 1304 may be implemented using any type of volatile or nonvolatile memory devices, or a combination thereof, including but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM).

When the communication device is implemented as a terminal, the processor and the transceiver in the communication device involved in embodiments of the present invention may be implemented together as a communication chip, or the transceiver forms a separate communication chip. The transmitter in the transceiver performs the sending step performed by the terminal in any of the above methods, the receiver in the transceiver performs the receiving step performed by the terminal in any of the above methods, and the processor performs steps other than the sending and receiving steps, which will not be elaborated here.

When the communication device is implemented as a network device, the processor and the transceiver in the communication device involved in embodiments of the present invention may be implemented together as a communication chip, or the transceiver forms a separate communication chip. The transmitter in the transceiver performs the sending step performed by the network device in any of the above methods, the receiver in the transceiver performs the receiving step performed by the network device in any of the above methods, and the processor performs steps other than the sending and receiving steps, which will not be elaborated here.

In an example embodiment, a computer-readable storage medium is provided. The computer-readable storage medium has stored therein at least one instruction, at least one program, a code set or an instruction set, and the at least one instruction, the at least one program, the code set or the instruction set is loaded and executed by the processor to perform the method for configuring an uplink positioning reference signal according to the various method embodiments described above.

In an example embodiment, a chip is provided. The chip includes a programmable logic circuit and/or a program instruction. When the chip is run on a communication device, the method for configuring an uplink positioning reference signal according to the various method embodiments described above is performed.

In an example embodiment, a computer program product is provided. When the computer program product is run on a processor of a computer equipment, the computer equipment performs the method for configuring an uplink positioning reference signal described above

It may be recognized by those skilled in the art that in one or more examples above, the functions described in embodiments of the present invention may be implemented using hardware, software, firmware, or any combination thereof. When implemented using the software, the functions may be stored in a computer-readable medium or transmitted as one or more instructions or codes in the computer-readable medium. The computer-readable medium includes a computer storage medium and a communication medium, and the communication medium includes any medium that facilitates transfer a computer program from one place to another. The storage medium may be any available medium that can be accessed by a general purpose or special purpose computer.

The above are only example embodiments of the present invention and are not intended to limit the present invention. Any modifications, equivalent substitutions, improvements, etc. made within the spirit and principles of the present invention shall be included in the protection scope of the present invention.

## Claims

1. A method for configuring an uplink positioning reference signal, performed by a terminal, comprising:
receiving a message for configuring the uplink positioning reference signal;
wherein the message comprises an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

2. The method according to claim 1, wherein the valid range comprises at least one of:
a cell identifier;
a radio access network (RAN) area identifier; or
a system message area identifier.

3. The method according to claim 1, wherein the valid time comprises at least one of:
a valid period of time, wherein the valid period of time comprises a valid starting moment and a valid duration; or
a valid cut-off moment.

4. The method according to any one of claims 1 to 3, wherein the message is a radio resource control (RRC) message.

5. The method according to any one of claims 1 to 3, wherein the uplink positioning reference signal comprises the valid range; and the method further comprises:
releasing the uplink positioning reference signal when the terminal is not within the valid range.

6. The method according to claim 5, wherein the valid range comprises a plurality of forms; and releasing the uplink positioning reference signal when the terminal is not within the valid range comprises:
releasing the uplink positioning reference signal when the terminal determines that a current range is not within any of the plurality of forms.

7. The method according to any one of claims 1 to 3, wherein the uplink positioning reference signal comprises the valid time; and the method further comprises:
releasing the uplink positioning reference signal when the terminal determines that a current moment is not within the valid time.

8. The method according to claim 3 or 7, wherein releasing the uplink positioning reference signal when the terminal determines that the current moment is not within the valid time comprises:
releasing the uplink positioning reference signal when the terminal determines that the current moment meets at least one of:
the current moment not within the period of time indicated by the valid starting moment and the valid duration; or
the current moment exceeding the valid cut-off moment.

9. The method according to any one of claims 1 to 3, further comprising:
starting a timer at the valid starting moment, and setting a duration of the timer to the valid duration; and
releasing the uplink positioning reference signal when the timer expires.

10. The method according to any one of claims 1 to 3, wherein the uplink positioning reference signal comprises the valid range and the valid time; and the method further comprises:
releasing the uplink positioning reference signal when the terminal is not within the valid range and/or not within the valid time.

11. The method according to any one of claims 1 to 3, further comprising:
in response to the terminal receiving the uplink positioning reference signal configuration via a radio resource control (RRC) reconfiguration message, and the uplink positioning reference signal is a periodic reference signal, starting to send the uplink positioning reference signal when the terminal enters an RRC idle state or an RRC inactive state.

12. A method for configuring an uplink positioning reference signal, performed by a network device, comprising:
sending a message for configuring the uplink positioning reference signal to a terminal;
wherein the message comprises an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

13. The method according to claim 12, wherein the valid range comprises at least one of:
a cell identifier;
a radio access network (RAN) area identifier; or
a system message area identifier.

14. The method according to claim 12, wherein the valid time comprises at least one of:
a valid period of time, wherein the valid period of time comprises a valid starting moment and a valid duration; or
a valid cut-off moment.

15. The method according to any one of claims 12 to 14, wherein the message is a radio resource control (RRC) message.

16. The method according to any one of claims 12 to 14, further comprising:
in response to the network device sending the uplink positioning reference signal configuration to the terminal via a radio resource control (RRC) reconfiguration message, and the uplink positioning reference signal is a periodic reference signal, receiving the uplink positioning reference signal sent by the terminal when the terminal enters an RRC idle state or an RRC inactive state.

17. An apparatus for configuring an uplink positioning reference signal, comprising:
a receiving module, configured to receive a message for configuring the uplink positioning reference signal;
wherein the message comprises an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

18. An apparatus for configuring an uplink positioning reference signal, comprising:
a sending module, configured to send a message for configuring the uplink positioning reference signal to a terminal;
wherein the message comprises an uplink positioning reference signal configuration of the uplink positioning reference signal, and a valid range and/or a valid time associated with the uplink positioning reference signal configuration, the valid range indicates an area range in which the uplink positioning reference signal configuration is valid, and the valid time indicates a period of time in which the uplink positioning reference signal configuration is valid.

19. A terminal, comprising:
a processor;
a transceiver, connected to the processor; and
a memory, configured to store instructions executable by the processor;
wherein the processor is configured to load and execute the executable instructions to perform the method for configuring the uplink positioning reference signal according to any one of claims 1 to 11.

20. A network device, comprising:
a processor;
a transceiver, connected to the processor; and
a memory, configured to store instructions executable by the processor;
wherein the processor is configured to load and execute the executable instructions to perform the method for configuring the uplink positioning reference signal according to any one of claims 12 to 16.

21. A computer-readable storage medium, having stored therein executable instructions that, when loaded and executed by a processor, cause the method for configuring the uplink positioning reference signal according to any one of claims 1 to 16 to be performed.

22. A chip, comprising a programmable logic circuit or a program, and configured to implement the method for configuring the uplink positioning reference signal according to any one of claims 1 to 16.
